# EUROPEAN PATENT SPECIFICATION

(11) **EP 2 796 027 B1**
(45) Date of publication and mention of the grant of the patent: **08.07.2015**
(21) Application number: 14164987.1
(22) Date of filing: 16.04.2014
(51) Int. Cl.: A01B 33/12, A01B 33/16

(54) **An agricultural machine for working the land**
Landwirtschaftliche Machine für Bodenbearbeitung
Machine agricole pour le travail du sol

(30) Priority: 23.04.2013 IT VR20130096
(43) Date of publication of application: 29.10.2014
(73) Proprietor: Hortus S.r.l., 35021 Agna (Padova) (IT)
(72) Inventor: Gallo, Antonio, 35021 Arre (Padova) (IT)
(74) Representative: Lissandrini, Marco

(56) References cited:
- EP-A1- 1 673 968
- FR-A1- 2 669 054
- US-A- 3 521 712
- US-A- 3 800 880

## Description

This invention relates to an agricultural machine for working the land.

More specifically, this invention relates to an agricultural machine designed to work farmland and equipped with a rake for stopping the fragments raised during the working.

The machine according to this invention is, for example, a stone burier machine which can be advantageously applied in the agricultural sector for working farmland, in particular for preparing the optimum seed bed for herbaceous crops.

The stone burier machine is a work device generally for use on farms already structured and equipped to offer to large-scale distributors and/or the retail market, fresh vegetables such as: salad, valerian, spinach and all the vegetables which have a similar development of roots and leaves. More specifically, the purpose of the stone burier machine is to prepare the seed bed, working the land in such a way as to give it the optimum characteristics for the sprouting of the above-mentioned vegetables.

In other words, the stone burier machine works the land making it soft, but at the same time compact; further, the stone burier machine guarantees the uniformity of these characteristics down to a predetermined depth of the land treated and for the full width of the portion of the land worked by the machine.

In the prior art (i.e. US 3 521 712), the stone burier machine, like many other agricultural machines, is generally of the passive type, that is to say, it must be pulled and powered mechanically to allow the movement on the land and the movement of the movable parts.

In other words, the stone burier machine is not equipped with an autonomous mechanical power source, but is structurally designed to receive it from an external source.

In the prior art, the external power source is the agricultural tractor which is equipped with an internal combustion engine, suitable coupling systems compatible with a range of agricultural machinery and specific "power outputs" for powering the above-mentioned machines.

More in detail, the stone burier machine comprises a metal frame equipped at its front part, with an articulated mechanical coupling and a "power input" configured, respectively, for coupling with the agricultural tractor and for receiving power from the agricultural tractor. The frame of the stone burier machine is generally supported at the lateral ends by a pair of wheels.

The work devices, that is, the movable parts of the stone burier machine, are powered directly by the power delivered by the tractor by means of a mechanical connection between the "output power" of the agricultural tractor and the above-mentioned "input power": this power connection generally comprises a universal joint.

The main work devices forming the stone burier machine, as known in the prior art, are listed below according to a structural order, starting from the front end of the frame of the machine to the rear end of the machine.

The first element of the stone burier machine is a pair of disc-shaped blades mounted on the frame and obliquely positioned relative to the direction of movement of the machine for making the furrows along the respective lateral ends of the work area.

Generally, the disc-shaped blades are passive, that is to say, they do not require a power supply from an external source.

There is than an element for working the land, generally comprising a cylindrical motor-driven rotor with the axis of rotation at right angles to the direction of movement of the machine equipped, on the cylindrical outer surface, with a set of tools shaped in the form of a hoe designed to break up the soil. The rotor (also known in the agricultural sector as "cutter") is powered with the power coming from the agricultural tractor, thanks to the above-mentioned mechanical power connection, controlled by a transmission box.

For the stone burier machine, the cutter is an essential work device, since it is the active unit designed to break up the soil. The cutter can adopt different structural and dimensional configurations according to the particular type of work on the land.

Since, depending on the conditions of the land, the entire volume of the fragments resulting from the breaking up does not immediately fall due to the effect of gravitational acceleration, prior art teaches the use of a fixed rake, or "comb", rigidly connected to the frame of the stone burier machine.

Generally, the rake comprises a certain number of metal teeth arranged according to a predetermined spacing, on a plane usually at right angles to the direction of projection of the fragments raised by the rotor. The rake, as described, is subjected to high mechanical stresses and wear and also requires a continuous cleaning of the accumulation of fragments between the teeth.

Lastly, in order to complete the general description of the structure of a stone burier machine, a motor-driven compactor roller is positioned at the rear end with the purpose of levelling and pressing the soil previously broken up by the cutter.

In the agricultural stone burier machines currently on the market, the fixed rake designed to reduce fragments and dust raised during rotation of the cutter has several important drawbacks, described below.

Mainly, every time the stone burier machine is used, the end user must carefully clean the fixed rake, which requires the removal of the fragments accumulated during the working of the land. In effect, due to the humidity contained in the soil moved by the stone burier machine, the significant accumulation of fragments compacted between the teeth of the rake and in all the parts of the working area of the machine is systematic.

The accumulation of the fragments significantly reduces the production capacity of the machine especially in terms of quality. In effect, the systematic and gradual accumulation of fragments results in a gradual reduction of the free space in which the cutter is free to rotate. In the most serious cases, the accumulation of fragments is so voluminous that the fragments enter into contact with the hoes of the cutter in rotation.

In the prior art, the problem of the systematic accumulation of the fragments has developed the tendency to install the teeth of the rake with a greater spacing between each other, with the aim of dealing with the problem, especially if the soil is particularly moist. Disadvantageously, the greater spacing between the teeth of the rake penalises the reduction of fragments and dust raised during rotation of the cutter. In effect, with the teeth further apart there is the passage of fragments larger than the predetermined size, with the result of having a less improved soil.

In other words, it creates a mass of muddy fragments (produced by the breaking up of the soil by the cutter) which accumulate in an undesired manner occupying the entire working area at an extremely small distance from the cutter, preventing the correct process for breaking up and releasing subsequent fragments on the land by the cutter.

Moreover, it should be noted that it is possible that the mud accumulated in the working area of the stone burier machine, because of its weight and vibrations, can become detached from the inner walls of the frame during use and fall on the land as a block, thus altering the normal flow for releasing the fragments normally placed by the cutter. It should be noted that the term "working area of the stone burier machine" refers to the area inside the frame between the cutter and the rake.

The detachment of pulpy blocks which have accumulated extensively inside the working area, or more generally the release of fragments with undesired trajectories influenced by the above-mentioned accumulation also alters the operating conditions of the compactor roller which would find itself operating on land with excessive dips or mounds depending on the accumulation and detachment of the above-mentioned muddy blocks, thus being unable to form a correct and effective compacting action.

With the addition, also, of the seasonal changes in weather conditions and the effect of this on the condition of the agricultural land (each time being more or less dry and compacted), one can easily understand the unpredictability and the worsening of the above-mentioned disadvantages. More specifically, under very moist soil conditions, it is not possible to use the stone burier machine on account of the serious concurrent nature of some of the above-mentioned problems.

The removal of the muddy blocks which accumulate in the working area can sometimes require considerable forces, especially in the case of compacted and dried mud and its removal can expose the structural components of the machine (in particular the teeth of the rake, which are slender in shape and mounted in a cantilever fashion) to breakage or permanent damage.

The breakage of the teeth or other parts of the fixed rake of the stone burier machine result in a necessary machine stoppage for the repair, since a partial interference in the functionality of the machine would adversely affect the successful working on the land.

In addition, the maintenance of the fixed rake often requires operations that involve several technical resources, particular safety procedures and mechanical workshop means also for lifting the stone burier machine above the ground.

Inevitably, all these drawbacks reflect on the running costs of the stone burier machine which the farmer, when purchasing, must consider.

Obviously, the above-mentioned drawbacks are also present in other types of agricultural machines different from the specific stone burier machine, in particular in all those machines which involve operations on the land such as, for example, breaking up or turning over of the soil.

In this context, the technical purpose of this invention is to provide an agricultural machine for working the land which is free of the above-mentioned drawbacks.

More specifically, the aim of this invention to provide a an agricultural machine for working the land which offers a high level of reliability during operation.

The aim of this invention is also to provide an agricultural machine for working the land which has a high operating efficiency, which is constant from the first moment of use to the last.

These and other aims are substantially achieved by an agricultural machine for working the land as described in claim 1.

Further features and advantages are more apparent in the detailed description which follows of a preferred embodiment of an agricultural machine for working the land according to this invention.

This description is made with reference to the accompanying drawings, which are also provided solely for purpose of non-limiting example and in which:
- Figure 1 is a side view of an agricultural machine according to this invention in a configuration for use and with some hidden components highlighted with a dashed line;

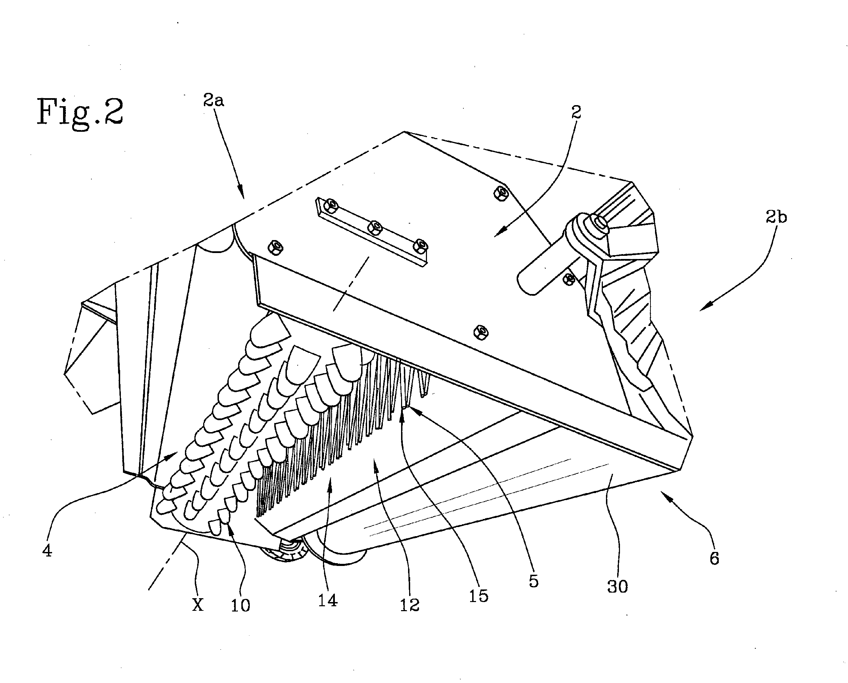

- Figure 2 is a perspective view from below of a close up detail of a part of the agricultural machine of Figure 1;
- Figure 3a is a schematic side view of the machine of Figure 1 to show the operating principle;
- Figure 3b is a schematic plan view of the machine of Figure 1 to show the operating principle.

With reference to the accompanying drawings, the numeral 1 denotes in its entirety an agricultural machine for working the land according to this invention.

The description which follows is directed more specifically to an agricultural machine designed to break up the soil to prepare it for sowing. However, the teachings of the invention are similarly applicable to any other machine suitable for working the land such as, for example, breaking up or turning over of the soil, equipped, therefore, with means for working the land.

The agricultural machine 1 comprises a frame 2 and a succession of work devices mounted on the frame 2.

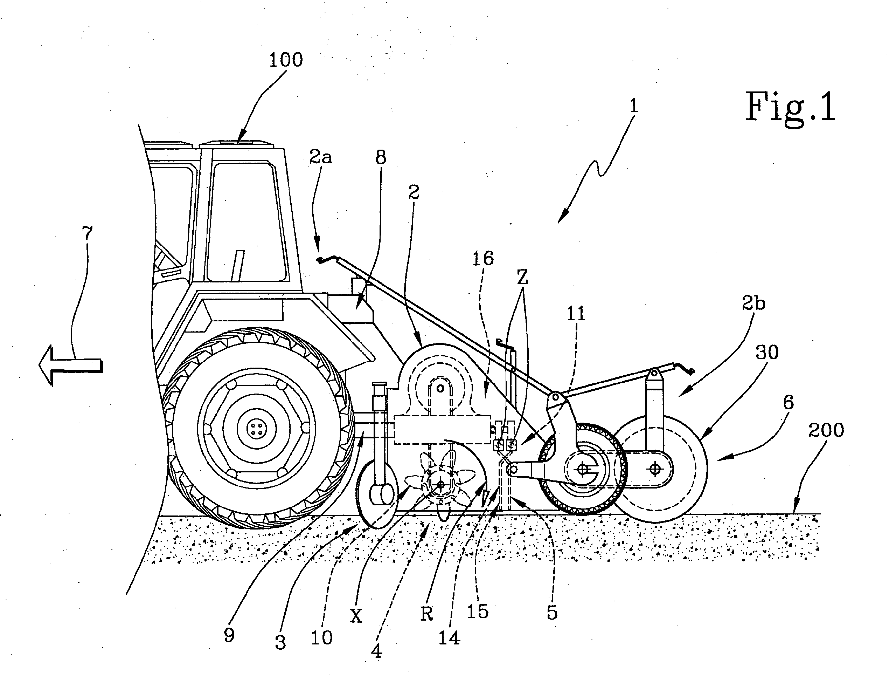

In the preferred configuration for use illustrated in Figure 1, the work devices mounted on the frame 2 are:
- means 3 for marking the land (optionals);
- cutting means 4 for working the land;
- a comb unit 5 for stopping the fragments;
- levelling means 6.

The numeral 7 defines the direction of pulling the machine 1 according to Figure 1, which is directed from the right to the left in the normal orientation of the drawing.

The frame 2 of the machine 1 has a structure which extends preferably along the pulling direction 7 between a front end 2a and a rear end 2b. The frame 2 is equipped on its front end 2a with suitable coupling means 8 for connection to the rear part of an agricultural vehicle 100, and a power pick-up 9.

It is also equipped with a pair of wheels fitted with agricultural type tyres which support and guide, in conditions of use, the frame 2 from the relative lateral ends.

There is also a connection with the same agricultural vehicle 100 between the power pick-up 9 and a power outlet provided on the rear part of the agricultural vehicle 100, for example by means of a universal joint.

All the other above-mentioned work devices are also mounted on the frame 2, according to the respective function.

The means 3 for marking the land comprise a pair of elements shaped in the form of a blade fixed to the lateral ends of the front end 2a of the frame 2, positioned obliquely to the pulling direction 7 of the machine 1. The blade-shaped elements are necessary where the drainage ditches of the portion of the land worked by the machine 1 are to be marked and the residual soil removed is to be conveyed directly towards the central part and in front of the cutter 4 of the agricultural machine 1.

With reference to Figure 1, the cutter 4 preferably comprises an elongate cylindrical body, such as to extend along a respective longitudinal axis "X". Preferably, the cylindrical body of the cutter 4 is connected to the relative lateral ends of the frame 2, in such a way as to rotate about the axis "X" in the direction of rotation "R", in the normal condition of use. The axis of rotation "X" of the cutter 4 is positioned transversely to the pulling direction 7, preferably at right angles to that direction.

Preferably a plurality of protruding elements 10 (referred to below as "hoes") are keyed on the outer surface of the cylindrical body of the cutter 4; the hoes being shaped and positioned in such a way that the end opposite that connected to the cylindrical body is oriented towards the land.

Preferably, the position of the constraints of the cutter 4 on the frame 2 is such that the hoes 10 - during rotation of the cutter 4 about the axis "X" in the direction "R" - fall below the line of the land 200 by a predetermined distance.

Preferably, the hoes 10 are positioned along the axis "X" on the outer surface of the cylindrical body, according to a simultaneous combination of an angular interval along the outer circumference of the cutter 4 and a linear interval along the longitudinal axis "X", such that it produces in its entirety an ordered arrangement of the hoes 10, preferably of a helical type, on the outer surface of the cylindrical body of the cutter 4.

This technical feature allows a gradual and progressive impact of the hoes 10 of the cutter 4 on the line of the land 200, causing the simultaneous opening of a plurality of progressively deeper and wider furrows, causing lastly the breaking up of the soil, whilst the agricultural machine is pulled along the direction 7.

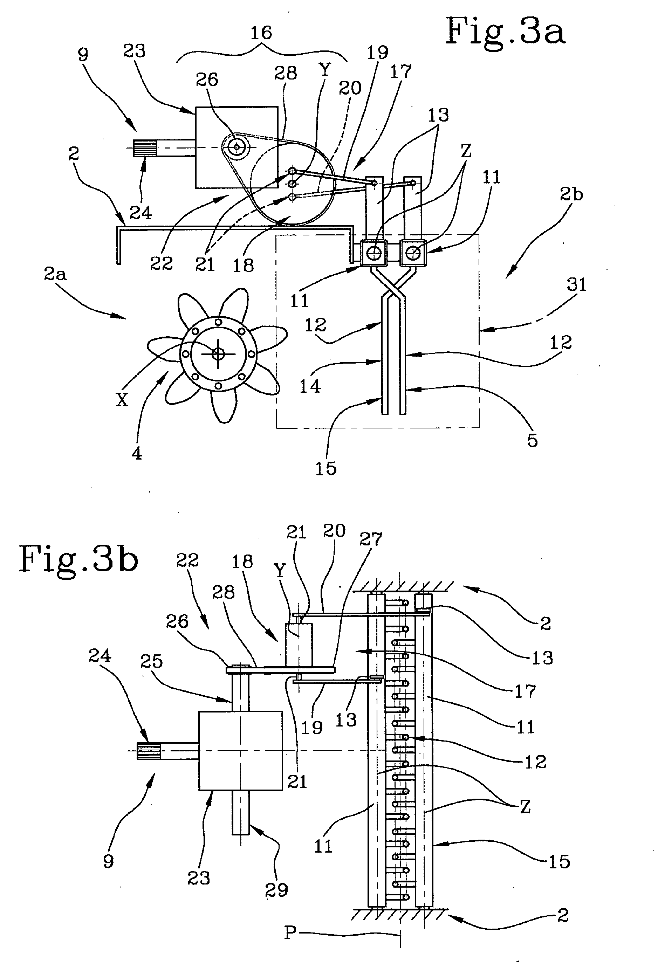

The action of the hoes 10 as described is such that the entire volume of the fragments deriving from the breaking up of the soil does not fall immediately due to the effect of gravitational acceleration. In other words, with reference to Figure 3a, the direction of rotation "R" of the cutter 4 is such that it gives the fragments raised a speed directed towards the rear end 2b of the agricultural machine 1.

For this reason, suitable means are required for stopping and placing the fragments. The means preferably comprise at least one first comb unit 5.

The comb unit 5 allows the portion of fragments moved by the cutter 4 to be stopped and the large fragments of soil to be accumulated at the points inside the frame 2, adjacent to the movable parts contained therein. In addition, the comb unit 5 makes it possible to limit and not lose the soil broken up by the front of the cutter 4.

Preferably, the comb unit 5 comprises a crosspiece 11, preferably a metal box-shaped profile which has a respective main direction of extension, and a set of teeth 12 fixed in cantilever fashion to the crosspiece 11 along the side of the crosspiece 11 facing the agricultural land 200. Preferably, the comb unit 5 also comprises a connecting bracket 13, fixed to the crosspiece 11 on the opposite side relative to the teeth 12.

Preferably, the crosspiece 11 of the comb unit 5 is positioned at right angles to the pulling direction 7 and fixed at the respective ends on the frame 2 of the agricultural machine 1 with a connection which allows rotation of crosspiece 11, preferably around the axis of extension "Z" of the crosspiece 11.

The teeth 12, fixed along the crosspiece 11, are equally spaced from each other by a distance (spacing) suitable for the type of fragments of soil worked by the machine 1. Preferably, the fixing spacing of the teeth is between 20 and 70 mm, preferably approximately 50 mm.

The teeth 12 fixed to the crosspiece of the comb unit 5 are all equal to each other, preferably having a shape of the cylindrical cross-section which extends along an elbow-shaped line, preferably lying on a longitudinal plane of the frame 2 of the machine 1.

Preferably, the teeth 12 are elbow-shaped such as to have a free end portion, opposite the portion for connection to the crosspiece, lying on a parallel plane and spaced by a predetermined distance from the main direction of extension "Z" of the respective crosspiece 11. Advantageously, the above-mentioned comb unit 5 for stopping the fragments is operatively associated with cleaning means 14 for mechanically removing the fragments of soil coming from the cutter 4.

In a preferred and illustrated embodiment, the above-mentioned cleaning means 14 preferably comprise a second comb unit 15, preferably made with the same structure as the first comb unit 5 and positioned in such a way as to allow the relative teeth 12 to insert between the teeth 12 of the first comb unit 5.

Advantageously, the first comb unit 5 and the second comb unit 15 face a relative plane "P", symmetrically relative to it, and such that they have an offset of the spacing of the respective teeth 12, in such a way as to allow their mutual intersection (for example, equal to half the spacing between two teeth fixed on the single unit 5 or second element 15), preferably when they are rotated relative to the axis of rotation "Z" of the respective crosspieces 11.

Advantageously, the machine 1 comprises movement means 16 mounted on the frame 2 and designed to move the teeth 12 of the comb units 5, 15 towards and away from each other between a first operating position, wherein the teeth 12 of the first comb unit 5 and the teeth 12 of the second comb unit 15 are spaced from each other, and a second operating position wherein the teeth 12 of the first comb unit 5 are alternated with the teeth 12 of the second comb unit 15.

The movement means 16 act on the comb units 5, 15, gripping directly on the brackets 13. In this configuration, both the comb units 5 and 15 are rotated about the respective axes of rotation "Z" by the action applied on the brackets 13 of the movement means.

In other words, the movement means 16 determine an alternating oscillating movement of the teeth 12 of the first and the second comb units 5, 15, in such a way as to insert (in other words, interlace) the ones between the others.

Advantageously, the movement means comprise a mechanism of the rod-crank type 17 mounted on the frame 2 and acting on the actuating brackets 13. Preferably, in accordance with the embodiment illustrated, the rod-crank mechanism 17 comprises a rotatable unit 18 rotated about a respective axis of rotation "Y", connected to a power pick-up 9 of the machine 1, and a pair of rods 19, 20 each having a first end connected to a respective bracket 13 and a second end connected to the rotatable unit 18 at the respective pins 21.

The simultaneous connection of the rods 19, 20 to the rotatable unit 18 synchronises the movement of the teeth 12 of the two comb units 5, 15.

Advantageously, the above-mentioned pins 21 are fixed on the rotatable unit 18 at a position diametrically opposite and on opposite faces of the rotatable unit, in such a way as to confer on the two comb units 5, 15 respective oscillation movements which are equal and opposite to each other.

For this reason, during the rotation of the rotatable unit 18, a rod 19 rotates in one direction the respective comb unit 5, whilst the other rod 20 rotates the respective comb unit 15 in the opposite direction.

The alternating oscillation cycle of the comb units 5, 15 is completed at every revolution of the rotatable unit 18.

The rotatable unit 18 is connected to the power pick-up 9 by means of a mechanical drive 22 the main function of which is to provide a gear ratio between the power pick-up 9 and the rotatable unit 18.

Preferably, the mechanical drive 22 comprises a transmission 23 box having an inlet shaft 24 with a longitudinal axis and at least one first outlet shaft 25 with a transversal axis. In other words, the transmission box 23 defines at least one angular drive, for example by means of conical wheels (not illustrated).

Moreover, preferably, the mechanical drive 22 has a mechanical reduction gear unit designed to reduce the speed of the rotatable unit 18 relative to the speed of rotation of the power pick-up 9 (and therefore of the first shaft 24). In the embodiment illustrated, the reduction gear unit is in the form of a pinion coupling mechanism 26 and gear wheel 27 connected to each other by a mechanical chain 28 and defining a predetermined gear ratio "i". Advantageously, the flexible chain drive 28 allows a suitable management of the power transmitted, but especially control of the gear ratio "i". Preferably, the gear ratio "i" is such that it is greater than one, meaning that the angular speed of rotatable unit 18 (which is integral with the gear wheel 27) is less than the angular speed of the pinion 26 (which is integral with the second shaft 25 of the transmission box 23).

In another embodiment of this invention, not illustrated, the power drive system can be made of other mechanical components, for example gear belts, trapezoidal belts, flexible monolithic joints made of suitable technical elastomers and similar solutions or by means of hydraulic type drive systems.

Advantageously, thanks the fact that the agricultural machine 1 comprises a cutter 4 designed to break up the soil and rotatable about an axis of rotation "X" perpendicular to the axis of rotation of the first shaft 24 of the transmission box 23, it is possible to configure the transmission box 23 with a third shaft 29 coaxial with the second shaft 25 and connected to the cutter 4 by means of a chain, a belt or similar connections. In this way, a single transmission box 23 moves both the cutter 4 and the comb units 5, 15.

In an embodiment not illustrated, the first comb unit 5 is rigidly connected to the frame 2, whilst the second comb unit 15 is rotatable about the respective axis of rotation in the same way as described above. Alternatively, in a further and different embodiment, not illustrated, the first comb unit 5 is rotatable around the respective axis of rotation, whilst the second comb unit 15 is rigidly connected to the frame 2.

The description of the work devices of the machine 1 is completed by the levelling means 6 which generally comprise a supporting crosspiece parallel to the axis "X" and a compactor roller 30.

The compactor roller 30 preferably has an elongate cylindrical shape along a respective longitudinal axis, which, in use, is parallel to the axis "X".

The compactor roller 30 is structured in such a way as to have a weight designed to suitably compress the soil broken up by the cutter 4 and a diameter of the outer surface such as to compact the soil correctly, preventing, at the same time, the sinking of the roller into the soil. Advantageously, the cleaning means 14 described in this invention allow the drawbacks of the prior art to be overcome, as they allow the traditional fixed rake systems to be replaced.

Advantageously, the alternating oscillation movement with consequent mutual insertion of the teeth 12 of the respective comb units 5 and 15 allows an effective and continuous cleaning of the teeth, as well as the working area 31 of the agricultural machine 1 during use.

In effect, the fragments broken up by the cutter 4 which do not immediately fall due to gravitational acceleration are effectively stopped and placed by means of the teeth 12 of the first comb unit 5 and the second comb unit 15.

Advantageously, every possible accumulation is prevented, irrespective of the type of soil (more or less clayey or sandy) and the humidity of the soil (more or less rainy short term weather conditions), by the mutual movement towards and away from each other of the teeth 12 of the first and second comb units 5, 15 which simulate in this way a continuous shaking such as to prevent any type of adhesion of the fragments on the teeth 12.

Advantageously, at the end of the working of the land, the agricultural machine 1 does not need a thorough and careful cleaning, thereby avoiding the risk of causing faults and/or malfunctions of the comb units (5 and 15) during the cleaning.

Advantageously, the compactor roller 30 is also such as to always work in the optimum conditions for which it has been designed and manufactured, thus avoiding sinking in the soil 200, or an excessive build-up of fragments in the area in front of the roller 30.

This invention advantageously allows a reduction in any faults in the comb units 5 and 15, especially of the teeth 12, reducing to a minimum the work required by the end user in terms of routine inspection and maintenance, which is limited to a simple regular lubrication of the moving parts.

In effect, as it is known that the gradual accumulation of fragments on the teeth 12 changes the weight of the teeth 12, thus increasing the inertia forces to which they are subjected during impact with the fragments and, therefore, the stresses inside the structure of the teeth 12, the fact that the conditions of the teeth 12 remain unchanged during the entire use of the machine 1 allows the internal stresses of the structure of the teeth 12 to be kept under control.

## Claims

1. An agricultural machine (1) comprising:
- a frame (2) movable over land (200);
- means (4) for working the land, mounted on the frame (2) in relation to a work area (31) and positioned in such a way that it faces the land (200);
- at least one first comb unit (5) equipped with teeth (12), mounted on the frame (2) and facing the means (4) for working the land for delimiting at least in part the work area (31) and stopping the fragments land coming from the working means (4);
- cleaning means (14) mounted on the frame (2) and operatively associated with the comb unit (5) for mechanically moving fragments of land (200) and/or detritus from the teeth (12) of the first comb unit (5), **characterised in that** said cleaning means (14) comprise at least a second comb unit (15) equipped with teeth (12) positioned in such a way as to be, in at least one operating position, alternated with the teeth (12) of the first comb unit (5), and wherein the machine (1) also comprises movement means (16) mounted on the frame (2) and designed to move the teeth (12) of the comb unit (5,15) towards and away from each other between a first operating position, wherein the teeth (12) of the first comb unit (5) and the teeth (12) of the second comb unit (15) are spaced from each other, and a second operating position wherein the teeth (12) of the first comb unit (5) are alternated with the teeth (12) of the second comb unit (15).

2. The machine (1) according to claim 1, wherein the comb units (5,15) are mounted rotatably on the frame (2) to rotate about respective axes of rotation (Z) preferably parallel to each other, and wherein the movement means (16) act on both of the comb units (5,15) for rotating each comb unit (5,15) about the respective axis of rotation (Z).

3. The machine (1) according to claim 2, wherein each comb unit (5,15) comprises a rigid upper crosspiece (11) hinged to the frame (2) to rotate about the respective axis of rotation (Z), and wherein the teeth (12) of each comb unit (5,15) are fixed to projecting in cantilever fashion towards the land at the respective crosspiece (11).

4. The machine (1) according to claim 2 or 3, wherein each crosspiece (11) extends about an axis coincident with the respective axis of rotation (Z).

5. The machine (1) according to claim 2 or 3, wherein the movement means (16) comprise a mechanism of the type rod-crank (17) acting on actuating brackets (13) fixed above each of which one of the crosspieces (11).

6. The machine (1) according to claim 5, wherein the mechanism rod-crank (17) comprises a unit (18) rotatable about an axis (Y), mounted on the frame (2) and connected to a power pick-up (9) of the machine (1), and a pair of rods (19,20) each having a first end connected to a respective bracket (13) and a second end connected to the rotatable unit (18).

7. The machine (1) according to claim 6, wherein the rods (19,20) are connected to the rotatable unit (18) mounting at points (21) diametrically opposite the axis of rotation (Y) of the rotatable unit (18).

8. The machine (1) according to claim 6 or 7, wherein the movement means (16) also comprise a mechanical drive (22) interposed between the rotatable unit (18) and the power pick-up (9) of the machine (1) and defining a gear ratio "i" between to less power of rotation of the pick-up (9) and to less than of rotation of the rotatable unit (18).

9. The machine (1) according to claim 1, wherein the teeth (12) of the comb units (5,15) extend in a mainly elbow-shaped direction.

## Patentansprüche

1. Landwirtschaftliche Maschine (1) umfassend:
- einen Rahmen (2), der über Boden (200) beweglich ist,
- Mittel (4) zur Bearbeitung des Bodens, die an dem Rahmen (2) im Verhältnis zu einem Arbeitsbereich (31) montiert und derart positioniert sind, dass diese dem Boden (200) zugewandt angeordnet sind;
- mindestens eine erste Kammeinheit (5), die mit Zähnen (12) ausgestattet und an dem Rahmen (2) und den Mitteln (4) zur Bearbeitung des Bodens zugewandt montiert ist, um zumindest teilweise den Arbeitsbereich (31) abzugrenzen und von den Arbeitsmitteln (4) kommende Bodenfragmente zu stoppen;
- Reinigungsmittel (14), die an dem Rahmen (2) montiert und betriebswirksam mit der Kammeinheit (5) verbunden sind, zum mechanischen Bewegen von Bodenfragmenten (200) und/oder Geröll aus den Zähnen (12) der ersten Kammeinheit (5),
**dadurch gekennzeichnet, dass** diese Reinigungsmittel (14) mindestens eine zweite Kammeinheit (15) mit Zähnen (12) umfassen, die derart positioniert sind, dass sie, in mindestens einer Betriebsposition, abwechselnd mit den Zähnen (12) der ersten Kammeinheit (5) angeordnet sind, und wobei die Maschine (1) auch Bewegungsmittel (16) umfasst, die an dem Rahmen (2) montiert und so ausgelegt sind, um die Zähne (12) der Kammeinheit (5, 15) zueinander hin und voneinander weg zu bewegen zwischen einer ersten Betriebsposition, wobei die Zähne (12) der ersten Kammeinheit (5) und die Zähne (12) der zweiten Kammeinheit (15) voneinander beabstandet sind, und einer zweiten Betriebsposition, wobei die Zähne (12) der ersten Kammeinheit (5) mit den Zähnen (12) der zweiten Kammeinheit (15) abwechseln.

2. Maschine (1) nach Anspruch 1, wobei die Kammeinheiten (5, 15) drehbar an dem Rahmen (2) montiert sind, um um die jeweiligen Drehachsen (Z) zu drehen, vorzugsweise parallel zueinander, und wobei die Bewegungsmittel (16) auf den beiden Kammeinheiten (5,15) wirken zum Drehen beider Kammeinheiten (5, 15) um die jeweilige Drehachse (Z).

3. Maschine (1) nach Anspruch 2, wobei jede Kammeinheit (5, 15) ein starres oberes Querstück (11) umfasst, das am Rahmen (2) angelenkt ist, um um die jeweilige Drehachse (Z) zu drehen, und wobei die Zähne (12) jeder Kammeinheit (5, 15) fixiert sind um freitragend in Richtung des Bodens am jeweiligen Querstück (11) herauszuragen.

4. Maschine (1) nach Anspruch 2 oder 3, wobei sich jedes Querstück (11) um eine Achse, die mit der entsprechenden Drehachse (Z) übereinstimmt, erstreckt.

5. Maschine (1) nach Anspruch 2 oder 3, wobei die Bewegungsmittel (16) einen Kurbelstangenmechanismus (17) umfassen, der auf Betätigungsbügel (13), die jeweils auf jedem Querstück (11) fixiert sind, wirkt.

6. Maschine (1) nach Anspruch 5, wobei der Kurbelstangenmechanismus (17) eine Einheit (18), die drehbar um eine Achse (Y) ist, umfasst, die an dem Rahmen (2) und mit einer Stromaufnahme (9) der Maschine (1) verbunden ist, und ein Paar Stangen (19, 20), die jeweils mit einem erstes Ende mit einem entsprechenden Bügel (13) verbunden sind und mit einem zweiten Ende an der drehbaren Einheit (18) verbunden sind.

7. Maschine (1) nach Anspruch 6, wobei die Stangen (19, 20) mit der drehbaren Einheit (18) an Montagepunkte (21), die sich diametral gegenüber der Drehachse (Y) der drehbaren Einheit (18) befinden, verbunden sind.

8. Maschine (1) nach Anspruch 6 oder 7, wobei die Bewegungsmittel (16) zudem einen mechanischen Antrieb (22) umfassen, der zwischen der drehbaren Einheit (18) und der Stromaufnahme (9) der Maschine (1) angeordnet ist und ein Übersetzungsverhältnis "i" zwischen der Rotationsgeschwindigkeit der Stromaufnahme (9) und der Rotationsgeschwindigkeit der drehbaren Einheit (18) definiert.

9. Maschine (1) nach Anspruch 1, wobei die Zähne (12) der Kammeinheiten (5, 15) sich wesentlich in ellbogenförmiger Richtung erstrecken.

## Revendications

1. Machine agricole (1) comprenant :
- un châssis (2) pouvant se déplacer sur le sol (200) ;
- des moyens (4) destinés à travailler le sol, montés sur le châssis (2) par rapport à une zone de travail (31) et positionnés de manière à ce qu'ils soient orientés vers le sol (200) ;
- au moins un premier organe à peigne (5) équipé de dents (12), monté sur le châssis (2) et faisant face aux moyens (4) destinés à travailler le sol pour délimiter au moins en partie la zone de travail (31) et arrêter les fragments de terre provenant des moyens de travail (4) ;
- des moyens de nettoyage (14) montés sur le châssis (2) et associés fonctionnellement à l'organe à peigne (5) pour déplacer mécaniquement les fragments de terre (200) et/ou les détritus provenant des dents (12) du premier organe à peigne (5),
**caractérisée en ce que** lesdits moyens de nettoyage (14) comprennent au moins un second organe à peigne (15) équipé de dents (12) positionnées de manière à s'alterner, dans au moins une position de fonctionnement, avec les dents (12) du premier organe à peigne (5), et dans laquelle la machine (1) comprend également des moyens de déplacement (16) montés sur le châssis (2) et conçus pour éloigner et rapprocher, les unes des autres, les dents (12) de l'organe à peigne (5, 15) entre une première position de fonctionnement, dans laquelle les dents (12) du premier organe à peigne (5) et les dents (12) du second organe à peigne (15) sont espacées les unes des autres, et une seconde position de fonctionnement dans laquelle les dents (12) du premier organe à peigne (5) s'alternent avec les dents (12) du second organe à peigne (15).

2. Machine (1) selon la revendication 1, dans laquelle les organes à peigne (5, 15) sont montés en rotation sur le châssis (2) pour tourner autour d'axes de rotation respectifs (Z) de préférence parallèles l'un à l'autre, et dans laquelle les moyens de déplacement (16) agissent sur les deux organes à peigne (5, 15) pour faire tourner chaque organe à peigne (5, 15) autour de son propre axe de rotation (Z).

3. Machine (1) selon la revendication 2, dans laquelle chaque organe à peigne (5, 15) comprend une traverse rigide supérieure (11) montée articulée sur le châssis (2) pour tourner autour de l'axe respectif de rotation (Z), et dans laquelle les dents (12) de chaque organe à peigne (5, 15) sont fixées pour dépasser en porte-à-faux vers le sol au niveau de la traverse respective (11).

4. Machine (1) selon les revendications 2 ou 3, dans laquelle chaque traverse (11) se développe autour d'un axe coïncidant avec l'axe respectif de rotation (Z).

5. Machine (1) selon les revendications 2 ou 3, dans laquelle les moyens de déplacement (16) comprennent un mécanisme du type bielle/manivelle (17) agissant sur des crochets d'actionnement (13) chacun d'eux étant fixés au-dessus d'une des traverses (11).

6. Machine (1) selon la revendication 5, dans laquelle le mécanisme bielle/manivelle (17) comprend un organe (18) pouvant tourner autour d'un axe (Y), monté sur le châssis (2) et relié à un collecteur de courant (9) de la machine (1), ainsi qu'une paire de tiges (19, 20) chacune ayant une première extrémité reliée à un crochet respectif (13) et une seconde extrémité reliée à l'organe rotatif (18).

7. Machine (1) selon la revendication 6, dans laquelle les tiges (19, 20) sont reliées à l'organe rotatif (18) sur des points de montage (21) diamétralement opposés par rapport à l'axe de rotation (Y) de l'organe rotatif (18).

8. Machine (1) selon les revendications 6 ou 7, dans laquelle les moyens de déplacement (16) comprennent aussi un entraînement mécanique (22) interposé entre l'organe rotatif (18) et le collecteur de courant (9) de la machine (1) et définissant un rapport de démultiplication « i » entre la vitesse de rotation du collecteur (9) et la vitesse de rotation de l'organe rotatif (18).

9. Machine (1) selon la revendication 1, dans laquelle les dents (12) des organes à peigne (5, 15) se développent dans une direction substantiellement en forme de coude.
